Europäisches Patentamt

European Patent Office

Office européen des brevets

(19)

(11) **EP 0 752 630 B1**

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int Cl.[7]: **G05B 11/42**, G05B 13/02

(21) Anmeldenummer: **96250139.1**

(22) Anmeldetag: **27.06.1996**

(54) **Regeleinrichtung und Verfahren zur Selbsteinstellung dieses Reglers**

Controlling device and method for the self-adjustment of this device

Contrôleur et méthode pour l'auto-ajustement du contrôleur

(84) Benannte Vertragsstaaten:
**DE FR GB IT SE**

(30) Priorität: **06.07.1995 DE 19525907**

(43) Veröffentlichungstag der Anmeldung:
**08.01.1997 Patentblatt 1997/02**

(73) Patentinhaber: **ABB PATENT GmbH**
**68309 Mannheim (DE)**

(72) Erfinder: **Bunzemeier, Andreas, Dr.-Ing.**
**32427 Minden (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**EP-A- 0 192 245       EP-A- 0 333 477**
**EP-A- 0 616 277       DE-A- 3 118 259**

**Beschreibung**

Die Erfindung betrifft eine Regeleinrichtung, die mindestens einen Integralanteil aufweist und die insbesondere für Regelstrecken ohne Ausgleich geeignet ist und ein Verfahren zur Selbsteinstellung einer derartigen Regeleinrichtung.

Unter einer selbsteinstellbaren Regeleinrichtung wird hierbei sowohl der sogenannte selbsteinstellende Regler, der seine optimalen Reglerparameter durch einen einmaligen Einstellvorgang findet, als auch der adaptive Regler, bei dem in Abhängigkeit von Veränderungen des zu regelnden Prozesses ständig die Reglerparameter angepaßt werden, verstanden.

Grundsätzlich ist es bekannt, beispielsweise aus "Messen Steuern Regeln für Maschinenbauer", Walter Kaspers und Hans-Jürgen Küfner, Friedr. Vieweg & Sohn Verlagsgesellschaft mbH, Braunschweig 1977, 1. Auflage, insbesondere S. 320, daß reine Integralregler mit Regelstrecken ohne Ausgleich, integral wirkende Strecken, zur Strukturinstabilität führen. Die Ursache dieser Strukturinstabilität liegt in der doppelten Polstelle im Ursprung der komplexen Bildebene für die in den Bildbereich transformierte Übertragungsfunktion des offenen Regelkreises, deren nachteilige Auswirkungen auf das Ausregelverhalten nicht durch entsprechende Vorhaltanteile des Reglers kompensierbar sind. Die Forderung nach stationärer Genauigkeit macht einen Integralanteil im Regler jedoch auch dann unverzichtbar, wenn die Regelstrecke ihrerseits bereits integrales Verhalten aufweist, wie aus W. Leonhard, "Einführung in die Regelungstechnik", 3. Auflage, Friedr. Vieweg & Sohn Verlagsgesellschaft mbH, Braunschweig 1985 bekannt ist.

Durch Hinzunahme eines Proportionalanteils im Regler wird ein sogenannter PI-Regler gebildet, bei dem über die Reglerparameter Proportionalbeiwert $K_p$ und Nachstellzeit $T_n$ die Anpassung an den Prozeß vorgenommen wird.

Gerade im Bereich der industriellen Standardregler, bei denen eine einfache Handhabung der Systeme, eine möglichst universelle Einsetzbarkeit sowie ein vergleichsweise geringer Realisierungsaufwand im Vordergrund des Interesses stehen, kommen oft selbsteinstellende beziehungsweise adaptive Regler zur Anwendung, die ihre Informationen über das Prozeßgeschehen ausschließlich aus dem zeitlichen Verlauf der Regeldifferenz ableiten. Das eigentliche Adaptionsprinzip basiert hierbei auf einer direkten Auswertung des zeitlichen Verlaufs der Regeldifferenz. Treten während der Ausregelphase Schwingungen der Regeldifferenz auf, so werden die Reglerparameter vom Adaptionsalgorithmus so verstellt, daß der Regler den Schwingungen entgegenwirkt. Für die Funktion dieses Verfahrens ist es jedoch wesentlich, daß zwischen den eingestellten Reglerparametern und dem charakteristischen Übergangsverhalten des Regelkreises, schwingendes oder aperiodisches Einlaufen in den Sollwert, ein eindeutiger und vor allem gleichsinniger Zusammenhang besteht.

Für einen derartigen PI-Regler kommt Bernd-Markus Pfeiffer in seinem Beitrag "Selbsteinstellende klassische Regler mit Fuzzy-Logik" in "at-Automatisierungstechnik" 42 (1994) 2, R. Oldenbourg Verlag unter Berufung auf den Testprozeß 10 aus R. Isermann "Digitale Regelsysteme" Bd. 1,2. Auflage,. Springer-Verlag Berlin 1988, zu dem Ergebnis, daß PI-Regler für Regelstrecken des Typs Integrator 2. Ordnung, sogenannte I-$T_1$-Regelstrecken, für die automatisierte Inbetriebnahme auf der Grundlage einer algorithmischen Auswertung des zeitlichen Verlaufs der Regeldifferenz ungeeignet sind.

Die Ursache dafür ist, daß sowohl für sehr große als auch für sehr kleine Proportionalbeiwerte $K_p$ des PI-Reglers die Schwingneigung der Regelgröße zunimmt und insoweit keine eindeutige Regel angebbar ist, in welche Richtung der Proportionalbeiwert $K_p$ zur Vermeidung von Instabilitäten zu verändern ist.

Zur Bestimmung der Reglerparameter ist weiterhin bekannt, die Regelstrecke durch ein Modell zu beschreiben, das die Eigenschaften der Regelstrecke nachbildet. Zur Regelung derartiger Regelstrecken ist es aus "Rechnergestützte Optimierung statischer und dynamischer Systeme", Heinrich G. Jacob, Fachberichte Messen/Steuern/Regeln, Springer-Verlag, Berlin,Heidelberg, New York, 1982 bekannt, ein dynamisches Modell der Regelstrecke vorzusehen, das das Verhalten der Regelstrecke in allen Arbeitspunkten exakt nachbildet. Bei einem Arbeitspunktwechsel werden die neuen, den Arbeitspunkt beschreibenden Reglerparameter vorgegeben und an dem Regler eingestellt.

Die Erstellung eines derart exakten Modells ist sehr aufwendig und darüber hinaus explizit an eine fest vorgegebene Regelstrecke gebunden. Jede Änderung in der Regelstrecke beeinflußt deren Verhalten und ist demzufolge in dem exakten Modell zu berücksichtigen. Insbesondere für Unikate und sich in fortschreitender Entwicklung befindlicher Regelstrecken ist die Erstellung eines exakten dynamischen Modells ungeeignet.

Der Erfindung liegt daher die Aufgabe zugrunde, mit einfachen Mitteln einen einen Integralanteil aufweisenden Regler sowie ein Verfahren zu dessen Selbsteinstellung anzugeben, der ohne Modell auskommt und auf Verzögerungsstrecken ohne Ausgleich anwendbar ist.

Erfindungsgemäß wird ein diese Aufgabe lösender Regler mit den Mitteln des Patentanspruchs 1 gebildet. Vorteilhafte Ausgestaltungen des erfindungsgemäßen Reglers sind in den Patentansprüchen 2 bis 5 beschrieben.

Darüber hinaus wird die Aufgabe der Selbsteinstellung eines derartigen Reglers mit den Mitteln des Patentanspruches 6 gelöst.

Der Kern der Erfindung besteht darin, einem für sich bekannten PI-Regler ein Strukturelement beizuordnen, das eine der beiden Polstellen aus dem Ursprung gezielt in die linke $s$-Halbebene der komplexen Bildebene für die in den Bildbereich transformierte Übertragungsfunktion des offenen Regelkreises verlegt, so daß sich für kleine Proportionalbeiwerte $K_p$ stets eine reellwertige Polverteilung ergibt und somit ein aperiodisches Übergangsverhalten erzwungen wird.

Dieses Stukturelement ist durch ein Proportionalglied gebildet, das dem PI-Regler in Kette nachgeschaltet ist, wobei zwischen dem PI-Regler und dem Proportionalglied eine Mischstelle vorgesehen ist, die das Ausgangssignal des PI-Reglers mit der Regelgröße vergleicht. Das Zeitverhalten des über dieses Proportionalglied geschlossenen Regelkreises ist durch den Reglerparameter Rückführfaktor $K_r$ bestimmt.

Ausgehend von der Übertragungsfunktion des offenen Regelkreises, der aus einem PI-Regler und einer I-$T_n$-Regelstrecke besteht,

$$G_0(s) = K_p \frac{1 + sT_n}{sT_n} \cdot \frac{1}{sT_1 \cdot \prod_{k=1}^{n}(1 + sT_k)}$$

lautet die Übertragungsfunktion des erweiterten, offenen Regelkreises, der aus einem PI-Regler, einem erfindungsgemäß eingebundenen Proportionalglied und einer I-$T_n$-Regelstrecke besteht,

$$G_0(s) = K_p \frac{1 + sT_n}{sT_n} \cdot \frac{1}{1 + s\dfrac{T_1}{K_r} \cdot \prod_{k=1}^{n}(1 + sT_k)}.$$

Die Umgebung des PI-Reglers erscheint nun als P-$T_{n+1}$-Regelstrecke, deren Verstärkung stets genau eins beträgt. Vorteilhafterweise besteht bei dieser Anordnung ein gleichsinniger Zusammenhang zwischen dem Rückführfaktor $K_r$ und dem entsprechenden Übergangsverhalten, mit zunehmendem Rückführfaktor $K_r$ nimmt die Schwingneigung zu, so daß eine automatisierte Einstellung derartiger Regelkreise ermöglicht ist.

Die Erfindung wird nachstehend anhand eines Ausführungsbeispiels näher erläutert. Die dazu erforderlichen Zeichnungen zeigen:

Figur 1     ein Strukturschaltbild einer selbsteinstellbaren Regeleinrichtung
Figur 2     ein Strukturschaltbild einer Regeleinrichtung mit Adaptionseinrichtung
Figur 3     Gegenüberstellung des Regelverhaltens zum Stand der Technik

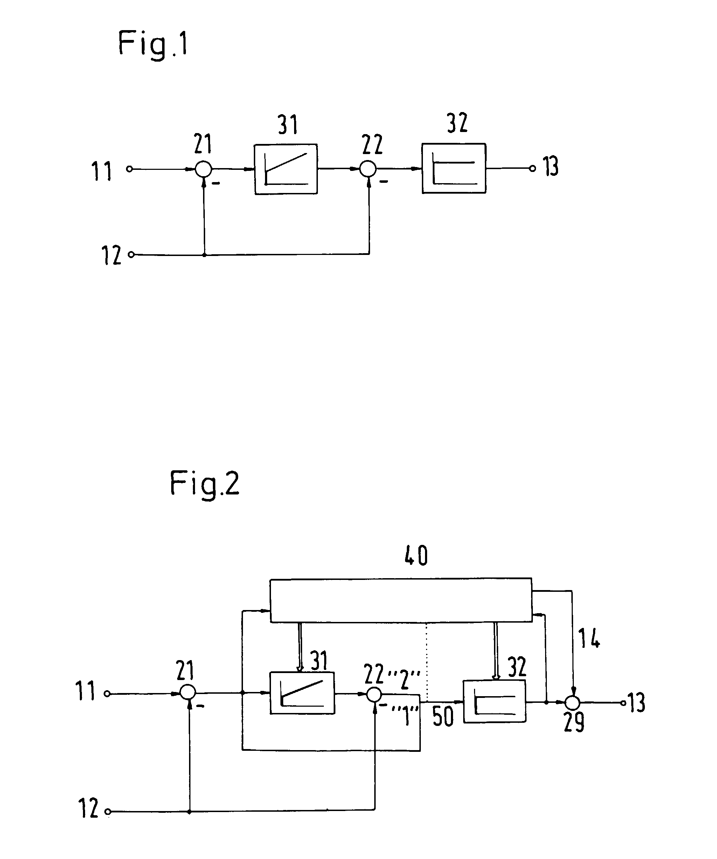

In Figur 1 ist eine selbsteinstellbare Regeleinrichtung prinzipiell dargestellt, die einen einen Proportional- und einen Integralanteil aufweisenden PI-Regler 31 umfaßt und bei der eine Führungsgröße 11 und eine Regelgröße 12 in einer Mischstelle 21 zusammengeführt werden, die dem PI-Regler 31 vorgeschaltet ist, wobei die Mischstelle 21 als Subtraktionsstelle ausgeführt ist. Dem PI-Regler 31 ist ein Proportionalglied 32 in Kette nachgeschaltet, wobei zwischen dem PI-Regler 31 und dem Proportionalglied 32 eine zweite Mischstelle 22 vorgesehen ist. Die zweite Mischstelle 22 ist als Subtraktionsstelle ausgeführt, bei der das Ausgangssignal des PI-Reglers 31 mit der Regelgröße 12 verknüpft wird.

Zur Einstellung einer Regeleinrichtung nach Figur 1 ist gemäß Figur 2 eine Umschalteinrichtung 50 zwischen der zweiten Mischstelle 22 und dem Proportionalglied 32 derart vorgesehen, daß der Eingang des Proportionalgliedes 32 wahlweise mit der zweiten Mischstelle 22 und mit dem Eingang des PI-Reglers 31 verbindbar ist.

Zur automatischen Einstellung der Regeleinrichtung ist eine Adaptionseinrichtung 40 vorgesehen, die einen ersten Signaleingang, der dem Eingang des PI-Reglers 31 parallelgeschaltet ist, einen zweiten Signaleingang, der dem Ausgang des Proportionalgliedes 32 parallelgeschaltet ist, Mittel zur Beeinflussung der Schaltstellung der Umschalteinrichtung 50, Mittel zur Beeinflussung der Reglerparameter des PI-Reglers 31 und des Proportionalgliedes 32 und einen Ausgang für einen Korrekturwert 14 zur Kompensation statischer Störgrößen vor der integral wirkenden Regelstrecke aufweist.

Darüber hinaus ist eine dritte Mischstelle 23 zur Verknüpfung des Ausgangssignals des Proportionalgliedes 32 mit dem Korrekturwert 14 zur Stellgröße 13 vorgesehen. Die dritte Mischstelle 23 ist als Summationsstelle ausgeführt. In vorteilhafter Weise lassen sich somit vor der integral wirkenden Regelstrecke angreifende Störungen, die zu einer mit der Zeit progressiv wachsenden Regelabweichung führen, mit dem dem Betrage nach gleichen, jedoch vorzeichenkomplementären Korrekturwert 14 kompensieren, ohne in die Regeleinrichtung als solche eingreifen zu müssen.

In weiterer Ausgestaltung der Erfindung ist vorgesehen, den PI-Regler 31 um ein Differenzierglied zum PID-Regler zu erweitern. Unter Beibehaltung der bereits beschriebenen Vorteile läßt sich das Führungsverhalten des Regelkreises auf diese Weise weiter verbessern, indem mit den Nullstellen des D-Anteils das durch die Rückkopplung entstandene konjugiert komplexe Polpaar kompensiert wird.

Zur Selbsteinstellung einer derartigen Regeleinrichtung im Rahmen einer automatisierten Inbetriebnahme sind zwei aufeinanderfolgende Zyklen vorgesehen. Dazu wird der Sollwert der Regelung mehrmals nacheinander sprungförmig verstellt und aus dem jeweiligen qualitativen Verlauf der Regeldifferenz, der aperiodisch oder schwingend sein kann, auf die erforderliche Korrektur der Reglerparameter geschlossen. Der Einstellvorgang ist beendet, wenn sich die Reglerparameter von einem Ausregelvorgang zum nächsten nicht mehr signifikant ändern.

Unter Bezugnahme auf Figur 2 wird in dem ersten Zyklus der Regelkreis ausschließlich über das Proportionalglied 32 geschlossen, der Proportionalanteil des Proportionalgliedes 32 in Form des Rückführfaktors $K_r$ ausgehend von einem vorgebbaren Startwert schrittweise nach einem vorgebbaren Algorithmus solange verstellt, bis das Überschwingen der Stellgröße 13 einen vorgegebenen Grenzwert gerade unterschreitet und der gefundene Rückführfaktor $K_r$ gehalten. Im einzelnen wird dazu die Umschalteinrichtung 50 in die Stellung "1" verbracht und ausgehend von einem vorgebbaren Startwert der Rückführfaktor $K_r$ mittels der Adaptionseinrichtung schrittweise so eingestellt, daß die Stellgröße 13 bei einer sprungförmigen Sollwertänderung möglichst schnell, jedoch ohne größeres Überschwingen in die Ausgangslage zurückkehrt.

Da es sich hierbei um eine eindimensionale Optimierung mit geringen Genauigkeitsanforderungen handelt, genügen hier je nach Startwert und Effizienz des dem Adaptionsverfahren zugrundeliegenden, vorgebbaren Algorithmus etwa drei bis fünf Ausregelvorgänge. Anschließend wird der Rückführfaktor $K_r$ festgesetzt.

Anschließend wird in einem zweiten Zyklus der Regelkreis über die vollständige Regeleinrichtung geschlossen, ausgehend von vorgebbaren Startwerten die Nachstellzeit $T_n$ und der Proportionalbeiwert $K_p$ des PI-Reglers 31 schrittweise nach einem vorgebbaren Algorithmus solange verstellt, bis die Überschwingweite und die Einschwingzeit vorgegebene Spezifikationen erfüllen, und der gefundene Proportionalbeiwert $K_p$ und die gefundene Nachstellzeit $T_n$ gehalten. Im einzelnen wird dazu die Umschalteinrichtung 50 in die Stellung "2" verbracht. Zur Bestimmung der Nachstellzeit $T_n$ und des Proportionalbeiwertes $K_p$ des PI-Reglers 31 als solche sind dabei die vorbekannten Methoden anwendbar.

Anhand eines exemplarischen Beispiels werden nachfolgend die prinzipiellen regeldynamischen Eigenschaften der erfindungsgemäßen Regeleinrichtung denen eines PI-Reglers nach dem Stand der Technik gegenübergestellt.

Betrachtet werde zunächst eine I-$T_1$-Regelstrecke mit der Übertragungsfunktion

$$G_s^{(s)} = \frac{1}{sT_I\,(1+sT_1)}$$

wobei für $T_I$ = 25s und für $T_1$ = 5s gelten möge.

Für eine Phasenreserve von $\varphi_{R1}$ = 70°, die ein nahezu aperiodisches Übergangsverhalten ergibt, wird für den Rückführfaktor $K_r$ = 1,94 ermittelt. Als Kehrwert der Kreisfrequenz, bei der der Betragsfrequenzgang des über den Rückführfaktor $K_r$ geschlossenen Regelkreises um 3 dB gegenüber dem Ausgangswert abgefallen ist, ergibt sich für die Nachstellzeit $T_n$ = 9,27s. Der Proportionalbeiwert $K_p$ des PI-Reglers wird so festgelegt, daß sich bei einer Phasenreserve von $\varphi_{R2}$ = 60° etwa 10% Überschwingen beim Führungsverhalten ergibt, und beträgt $K_p$ = 0,86.

Zum Vergleich wird ein konventioneller PI-Regler nach der "Methode des Symmetrischen Optimums", bei dem die Reglerparameter bekanntlich gerade so gewählt werden, daß die Durchtrittsfrequenz mit der Frequenz des Phasenmaximums zusammenfällt, was ein ausreichend gedämpftes Übergangsverhalten ermöglicht, entworfen. Für ein gutes Störverhalten wird eine Phasenreserve von $\varphi_R$ = 40° vorgegeben, so daß sich für den Proportionalbeiwert $K_p$ = 2,33 und für die Nachstellzeit $T_n$ = 23s ergeben.

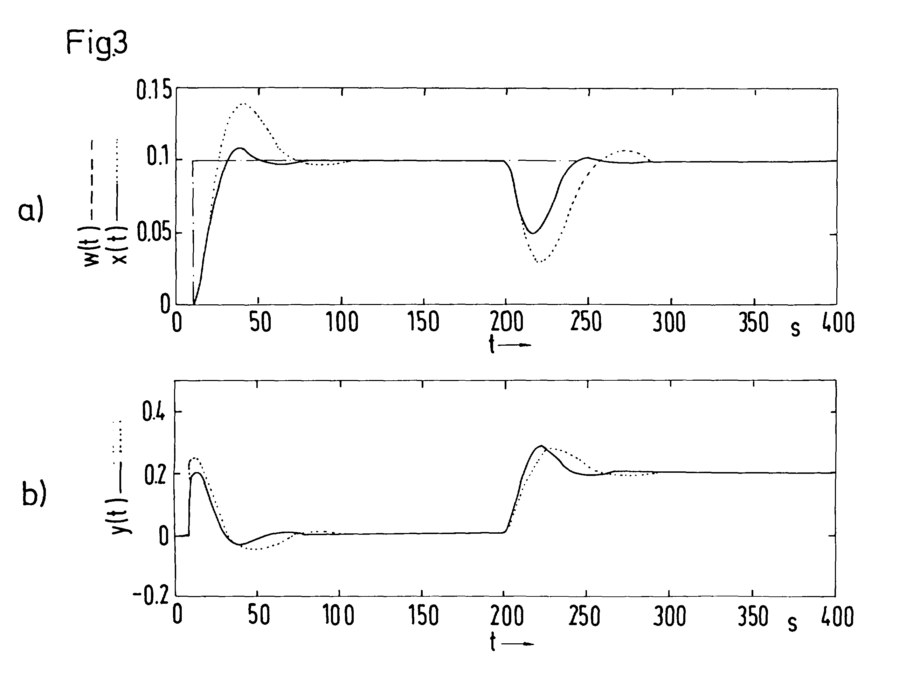

In Figur 3 sind die regeldynamischen Eigenschaften der erfindungsgemäßen Regeleinrichtung denen eines PI-Reglers nach dem Stand der Technik mit den vorgenannten Reglerparametern gegenübergestellt. Im einzelnen ist in Figur 3a das Führungsverhalten und in Figur 3b das Störsprungantwortverhalten bei einer Störung von z(t) = 0,2 σ (t-200) gezeigt, wobei die Zeitverläufe für die erfindungsgemäße Regeleinrichtung als durchgezogene Linien und die Zeitverläufe für den PI-Regler nach dem Stand der Technik punktiert dargestellt sind.

Aufgrund seiner Phasenanhebung im interessierenden Frequenzbereich weist die erfindungsgemäße Regeleinrichtung beim Führungs- wie auch beim Störverhalten deutliche Vorteile auf. Das Überschwingen der Regelgröße x(t) bei Sollwertänderungen w(t) ist trotz kürzerer Einregelzeit deutlich geringer, wie in Figur 3a dargestellt. Bei vergleichbarem Hub der Stellgrößen y(t) ist in Figur 3b analog zur Figur 3a das schnellere Einregeln auf den neuen Sollwert zu erkennen.

**Patentansprüche**

1. Regeleinrichtung, die mindestens einen Proportional- und einen Integralanteil aufweist und bei der eine Führungsgröße und eine Regelgröße in einer Mischstelle zusammengeführt werden, die dem Regler vorgeschaltet ist, dadurch gekennzeichnet,

   - daß die Regeleinrichtung aus einer Kettenschaltung, bestehend aus einem PI-Regler (31) und einem Proportionalglied (32), gebildet ist,
   - daß zwischen dem PI-Regler (31) und dem Proportionalglied (32) eine zweite Mischstelle (22) vorgesehen ist und
   - daß die Regelgröße (12) zusätzlich an die zweite Mischstelle (22) zwischen dem PI-Regler (31) und dem Proportionalglied (32) geschaltet ist.

2. Regeleinrichtung nach Anspruch 1
   dadurch gekennzeichnet,
   daß eine Umschalteinrichtung (50) zwischen der zweiten Mischstelle (22) und dem Proportionalglied (32) derart vorgesehen ist, daß der Eingang des Proportionalgliedes (32) wahlweise mit der zweiten Mischstelle (22) und mit dem Eingang des PI-Reglers (31) verbindbar ist.

3. Regeleinrichtung nach Anspruch 2
   dadurch gekennzeichnet,
   daß eine Adaptionseinrichtung (40) vorgesehen ist, die aufweist

   - einen ersten Signaleingang, der dem Eingang des PI-Reglers (31) parallelgeschaltet ist,
   - einen zweiten Signaleingang, der dem Ausgang des Proportionalgliedes (32) parallelgeschaltet ist,
   - Mittel zur Beeinflussung der Schaltstellung der Umschalteinrichtung (50),
   - Mittel zur Beeinflussung der Reglerparameter des PI-Reglers (31) und des Proportionalgliedes (32) und
   - einen Ausgang für einen Korrekturwert (14) zur Kompensation statischer Störgrößen vor der integral wirkenden Regelstrecke.

4. Regeleinrichtung nach einem der Ansprüche 1 bis 3
   dadurch gekennzeichnet,
   daß eine dritte Mischstelle (23) zur Verknüpfung des Ausgangssignals des Proportionalgliedes (32) mit dem Korrekturwert (14) zur Stellgröße (13) vorgesehen ist.

5. Regeleinrichtung nach einem der Ansprüche 1 bis 4
   dadurch gekennzeichnet,
   daß der PI-Regler (31) um ein Differenzierglied zum PID-Regler erweitert ist.

6. Verfahren zur Selbsteinstellung einer Regeleinrichtung aus einer Kettenschaltung, bestehend aus einem PI-Regler und einem Proportionalglied, mit einer Mischstelle zur Zusammenführung einer Führungsgröße und einer Regelgröße,
   dadurch gekennzeichnet,
   daß in einem ersten Zyklus

   - der Regelkreis durch Aufschaltung der Regeldifferenz auf den Eingang des Proportionalgliedes (32) ausschließlich über das Proportionalglied (32) geschlossen wird,
   - der Proportionalanteil des Proportionalgliedes (32) ausgehend von einem vorgebbaren Startwert schrittweise nach einem vorgebbaren Algorithmus solange verstellt wird, bis das Überschwingen der Stellgröße (13) einen vorgegebenen Grenzwert gerade unterschreitet und
   - der gefundene Proportionalanteil gehalten wird und

   daß in einem zweiten Zyklus

- der Regelkreis durch Aufschaltung der Differenz aus dem Ausgangssignal des PI-Reglers (31) und der Regelgröße (12) auf den Eingang des Proportionalgliedes (32) über die vollständige Regeleinrichtung geschlossen wird,
- ausgehend von vorgebbaren Startwerten die Nachstellzeit und der Proportionalbeiwert des PI-Reglers (31) schrittweise nach einem vorgebbaren Algorithmus solange verstellt werden, bis die Überschwingweite und die Einschwingzeit vorgegebene Spezifikationen erfüllen, und
- der gefundene Proportionalbeiwert und die gefundene Nachstellzeit gehalten werden.

## Claims

1. A regulating device comprising at least one proportional and one integral constituent wherein a reference variable and a regulating variable are brought together at a mixer point connected in series with the regulator, characterised in that

   - the regulating device is formed by a cascaded network consisting of a PI regulator (31) and a proportional member (32),

   - a second mixer point (22) is provided between the PI regulator (31) and the proportional member (32) and,

   - the regulating variable (12) is also applied to the second mixer point (22) located between the PI regulator (31) and the proportional member (32).

2. A regulating device in accordance with Claim 1,
   characterised in that
   a change-over switching device (50) is provided between the second mixer point (22) and the proportional member (32) in such a manner that the input of the proportional member (32) is selectively connectible to the second mixer point (22) or to the input of the PI regulator (31).

3. A regulating device in accordance with Claim 2,
   characterised in that
   there is provided an adapting device (40) which comprises

   - a first signal input which is connected in parallel with the input of the PI regulator (31),

   - a second signal input which is connected in parallel with the output of the proportional member (32),

   - means for controlling the switching position of the change-over switch (50),

   - means for controlling the regulating parameters of the PI regulator (31) and the proportional member (32) and

   - an output for a correction value (14) which is used for compensating static disturbances prior to the integrally effective regulated system.

4. A regulating device in accordance with any of the Claims 1 to 3,
   characterised in that
   there is provided a third mixer point (23) which is used for combining the output signal from the proportional member (32) with the correction value (14) so as to form the regulated quantity (13).

5. A regulating device in accordance with any of the Claims 1 to 4,
   characterised in that
   the PI regulator (31) is expanded by means of a differentiating member so as to form a PID regulator.

6. A method of automatically adjusting a regulating device formed by a cascaded network consisting of a PI regulator and a proportional member and including a mixer point at which a reference variable and a regulating variable are brought together,
   characterised in that
   in a first cycle

- the control loop is closed exclusively via the proportional member (32), by sending the regulating difference to the input of the proportional member (32),

- starting from a given start value, the proportional constituent of the proportional member (32) is adjusted step-by-step in accord with a given algorithm until such time as the amount by which the regulated quantity (13) overshoots is just below a given limiting value whereupon

- the so found proportional constituent is retained, and

in a second cycle

- the control loop is closed via the totality of the regulating device, by sending the difference between the output signal of the PI regulator (31) and the regulating variable (12) to the input of the proportional member (32),

- starting from a given start value, the integral-action time and the proportional correction value of the PI regulator (31) are adjusted step-by-step in accord with a given algorithm until such time as the width of the overshoots and the transient time fulfil given specifications, and

- the so found proportional correction value and the so found integral-action time are then retained.

**Revendications**

1. Dispositif de réglage, qui présente au moins une portion proportionnelle et une portion intégrale, et dans lequel une grandeur de guidage et une grandeur de réglage sont réunies dans un lieu de mixage qui est disposé en amont du régulateur,
   caractérisé en ce que :

   - le dispositif de réglage est formé d'un système itératif constitué d'un régulateur PI (31) et d'un élément proportionnel (32),
   - un second lieu de mixage (22) est prévu entre le régulateur PI (31) et l'élément proportionnel (32), et
   - la grandeur de réglage (12) est mise en circuit, de façon supplémentaire, au niveau du second lieu de mixage (22) entre le régulateur PI (31) et l'élément proportionnel (32).

2. Dispositif de réglage selon la revendication 1,
   caractérisé en ce qu'un dispositif de commutation (50) est prévu entre le second lieu de mixage (22) et l'élément proportionnel (32), de sorte que l'entrée de l'élément proportionnel (32) peut être reliée, au choix, au second lieu de mixage (22) et à l'entrée du régulateur PI (31).

3. Dispositif de réglage selon la revendication 2,
   caractérisé en ce qu'il est prévu un dispositif d'adaptation (40) qui présente :

   - une première entrée de signaux, qui est montée en parallèle à l'entrée du régulateur PI (31),
   - une seconde entrée de signaux, qui est montée en parallèle à la sortie de l'élément proportionnel (32),
   - des moyens pour influencer la position du dispositif de commutation (50),
   - des moyens pour influencer les paramètres du régulateur PI (31) et de l'élément proportionnel (32), et
   - une sortie pour une valeur de correction (14) pour la compensation de grandeurs parasites statiques avant l'étendue de réglage agissant de façon intégrale.

4. Dispositif de réglage selon une des revendications 1 à 3,
   caractérisé en ce qu'un troisième lieu de mixage (23) pour relier le signal de sortie de l'élément proportionnel (32) à la valeur de correction (14) pour la grandeur de réglage (13) est prévu.

5. Dispositif de réglage selon une des revendications 1 à 4,
   caractérisé en ce que le régulateur PI (31) est élargi, par un élément différenciateur, en le régulateur PID.

6. Procédé pour l'autoréglage d'un dispositif de réglage formé d'un système itératif, constitué d'un régulateur PI et d'un élément proportionnel, ayant un lieu de mixage pour réunir une grandeur de guidage et une grandeur de réglage,
caractérisé en ce que,
dans un premier cycle :

- le circuit de réglage est fermé par verrouillage de la différence de réglage sur l'entrée de l'élément proportionnel (32) exclusivement par l'intermédiaire de l'élément proportionnel (32),
- la portion proportionnelle de l'élément proportionnel (32) est réglée, à partir d'une valeur de démarrage pouvant être prédéfinie, pas à pas, selon un algorithme pouvant être prédéfini aussi longtemps que la suroscillation de la grandeur de réglage (13) n'atteint pas une valeur limite prédéfinie, et
- la portion proportionnelle trouvée est conservée, et

dans un second cycle :

- le circuit de réglage est fermé par verrouillage de la différence à partir du signal de sortie du régulateur PI (31) et de la grandeur de réglage (12) à l'entrée de l'élément proportionnel (32) par l'intermédiaire de tout le dispositif de réglage,
- à partir de valeurs de départ pouvant être prédéfinies, le temps d'ajustage et le facteur de correction proportionnel du régulateur PI (31) sont réglés, pas à pas, selon un algorithme pouvant être prédéfini, aussi longtemps que l'amplitude de suroscillation et le temps de réponse remplissent des spécifications prédéfinies, et
- le facteur de correction proportionnel trouvé et le temps d'ajustage trouvé sont conservés.

Fig.1

Fig.2

Fig3

a)

b)